Europäisches Patentamt

European Patent Office

Office européen des brevets

(11) Publication number: **0 402 011**
**A2**

## (12) EUROPEAN PATENT APPLICATION

(21) Application number: 90305673.7

(22) Date of filing: 24.05.90

(51) Int. Cl.⁵: **B23Q 1/14**

(30) Priority: 01.06.89 GB 8912552

(43) Date of publication of application:
**12.12.90 Bulletin 90/50**

(84) Designated Contracting States:
**DE FR GB IT NL**

(71) Applicant: **Pilkington plc**
**Prescot Road**
St. Helens Merseyside WA10 3TT(GB)

(72) Inventor: **Gray, David Andrew**
**11B Kingsley Court, Meliden**
**Prestatyn, Clwyd(GB)**

(74) Representative: **Jenkins, Peter David et al**
**PAGE, WHITE & FARRER 54 Doughty Street**
**London WC1N 2LS(GB)**

(54) Machine tool for and method of single point diamond turning.

(57) A machine tool for single point diamond turning for use with a workpiece holder which holds and rotates a workpiece, the machine tool comprising a tool carrier arranged for movement towards and away from the workpiece, a rigidly held piezo-electric element to which the tool carrier is operatively coupled and resistance means to resist movement of the tool carrier towards the workpiece, so that when a voltage is applied to the piezo-electric element it expands and moves the tool carrier towards the workpiece against the resistance of the resistance means. The invention also provides a single point diamond turning method in which additional movements of the diamond tool of up to 100 μm are superimosed on movements controlled by conventional lathe controls by applying a voltage across the piezo-electric element.

Fig.1.

This invention concerns improvements in or relating to machine tools for and methods of single point diamond tool turning. The term 'diamond tool' when used herein is to be understood as including, where the context permits, not only natural and synthetic diamond tools but also tools, such as cubic boron nitride tools, which have similar properties to diamond tools.

It is well known to use diamond tools when machining a wide range of non-metallic materials such as silicon, silicon carbides, glass, copper, aluminium, nickel, germanium, crystalline materials and plastics. Normally the diamond tool is simply used in place of a standard machine tool. However when greater accuracy is required, for instance in machining high quality optical surfaces, a different approach is necessary. In a paper in "Optical Engineering" volume 27, number 11 at page 1008 in an article entitled "Development of a precision diamond turning machine for fabrication of asymmetric aspheric mirrors", a single point diamond tool fly cutter is controlled by a piezo-actuator. The mechanism disclosed in this paper is designed to machine relatively large mirrors for use in soft x-ray optics. The mechanism achieves an accuracy of 0.1 $\mu$m. However for some applications a greater accuracy is required, for instance to produce zone plates.

GB-A-2142860 discloses machine tools wherein a piezo-electric crystal is employed to effect a linear movement to a tool. GB-A-2198669 discloses micro-displacement mechanisms incorporating piezo-electric elements. GB-A-2168272 discloses an accurate positioning apparatus for a machine tool which incorporates mechanical springs.

A paper entitled "Single-point diamond machining of glasses" by K.E. Puttick et al. in Proc.R.Soc. Lond., A426, 19-30 (1989) was published on 8th November 1989 (i.e. after the filing date of UK Patent Application No. 8912552.0 from which this application claims priority) and discloses a turning machine incorporating a piezo-electric transducer.

It is an aim of this invention to provide a diamond tool turning apparatus which is capable of machining to an accuracy of better than 0.1 $\mu$m. It is a further aim of this invention to provide a method for producing components of accuracy better than 0.1 $\mu$m.

According to one aspect of the present invention there is provided a machine tool for single point diamond turning for use with a workpiece holder which holds and rotates a workpiece, the machine tool comprising a tool carrier arranged for movement towards and away from the workpiece, a rigidly held piezo-electric element to which the tool carrier is operatively coupled and resistance means to resist movement of the tool carrier towards the workpiece, so that when a voltage is applied to the piezo-electric element it expands and moves the tool carrier towards the workpiece against the resistance of the resistance means.

According to another aspect of the present invention there is provided a single point diamond tool turning method in which a workpiece is rotated by a spindle which is part of a lathe with lathe controls, the method comprising the steps of controlling movements of the diamond tool towards the workpiece by the lathe controls and superimposing additional movements of the diamond tool towards the workpiece of up to 100 $\mu$m by applying a voltage across a rigidly held piezo-electric element which expands to move the diamond tool against resistance towards the workpice.

An embodiment of the invention will now be described, by way of example only, with reference to the following drawings, in which:-

Figure 1 is a cross-sectional representation of a machine tool according to an embodiment of the present invention;

Figure 2 is a representation of a zone plate machined using the present invention; and

Figure 3 is a representation of a workpiece machined using the present invention.

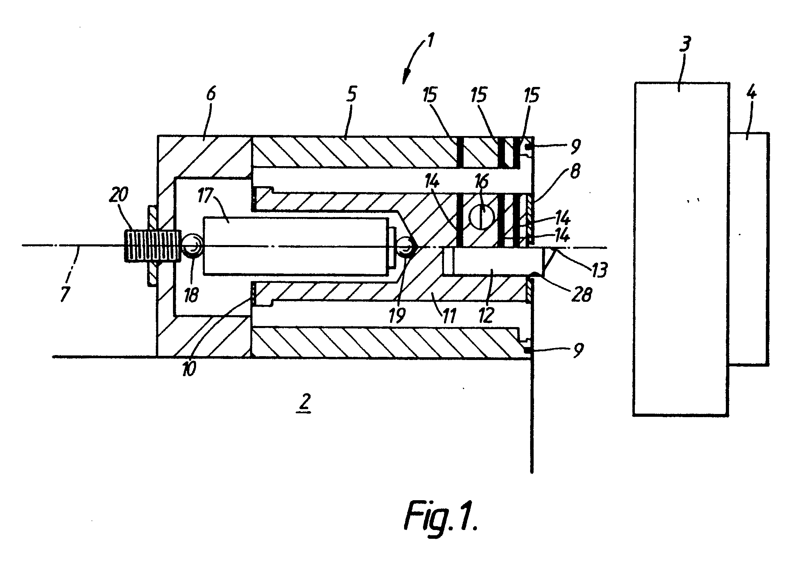

Figure 1 shows a tool post 1 on a cross slide 2 which is part of a standard lathe (not shown), operated by standard lathe controls. The toolpost 1 is shown adjacent a workpiece 3 which is mounted on a spindle 4. The spindle 4 is a smooth running spindle since a standard lathe spindle would not be sufficiently smooth for the accuracy required. An air bearing would provide a suitable spindle. The workpiece 3 may be any material suitable for diamond turning. The toolpost 1 has a two-piece metallic housing, i.e. a front housing 5 and a rear housing 6. The front housing 5 is of rectangular hollow cross-section and is open at each end. Centre line 7, lies along the axis of the rectangular housing 5. The front face of front housing 5 is closed by a first flexible, resilient, metallic plate or diaphragm 8 attached to the front housing 5 by screws 9. The front housing 5 and rear housing 6 are arranged so that a second flexible, resilient, metallic plate or diaphragm 10 is fixed between them. The plates 8 and 10 are parallel to one another, and are each provided with a hole to allow passage of a part of the arrangement as described below.

Suspended between and supported by the plates 8 and 10, so as not to contact the front housing 5, is a substantially cylindrical tool carrier 11. The carrier 11 has mounting means which allows a diamond tool 12 with a single working point 13 to be inserted into the carrier 11 with the point 13 protruding through a hole 28 in the first plate 8. The working point 13 is positioned on the centre line 7. Grub screws 14, accessed by holes 15 in the housing 5, hold the tool 12 in place.

A quadrant photo-diode 16 (hereafter QPD) is mounted in the carrier 11, between the access holes 15. A low power He/Ne laser (not shown) illuminates the QPD 16 through a hole in the front housing 5.

A piezo-electric element 17 with electrical terminals (not shown) is mounted between a pair of ball bearings 18 and 19 partly within a cylindrical space in the carrier 11. The assembly of ball bearings 18 and 19 and piezo-electric element 17 is held in compression by an adjustable screw 20 which is mounted in the rear wall of the housing 6. The piezo-electric element 17 passes through a hole in plate 10. The adjustable screw 20, the ball bearings 18 and 19, the piezo-electric element 17, and the carrier 11 are all arranged to be co-axial with the centre line 7.

In operation the position of the diamond tool 12 is controlled by a combination of the standard lathe controls and the piezo-electric element 17. For movements orthogonal to the centre line 7 the standard lathe controls are used. The operation of the lathe and the piezo-electric element 17 may be monitored and/or controlled by a computer. The standard lathe controls are used for movements parallel to the centre line 7 which are greater than about 100 $\mu$m. For similar movements of less than 100 $\mu$m the piezo-electric element 17 is used. Application of a voltage, by supply means (not shown), across the terminals of the piezo-electric element 17 causes it to expand and move the carrier 11 forward against the resisting action of plates 8 and 10. In this respect the resistance to the motion of the tool 12 provided by the workpiece 3 is negligible. The plates 8 and 10 also serve to prevent movements of the tool 12 orthogonal to the centre line 7 relative to the carrier 11, whilst resiliently allowing movements parallel to the centre line 7. The plates 8 and 10 may therefore be replaced by any means adapted to allow only movements parallel with centre line 7 which also provide some resistance to motion of the tool towards the workpiece 3. Suitable means include at least three wires in place of each of the plates 8 and 10, or the use of an air bearing around the tool to allow only movements parallel to the centre line 7 together with spring means to provide the necessary resistance. It is to be appreciated that the resistance means must not be mounted in such a way as to allow the workpiece 3 to cause any substantial movement of the tool. For instance in the specific embodiment described above the rear wall of the housing 6 must be substantially rigid or else this would allow the workpiece 3 to force the tool 12 towards the rear housing 6 thereby substantially reducing the accuracy of the tool control.

This also requires that the piezo-electric element 17 be rigidly mounted.

The ball bearings 18 and 19 ensure that the force exerted due to the expansion of the piezo-electric element 17 is transmitted to the carrier 11 substantially along the centre line 7. The plates 8 and 10 are capable of elastically deforming over the full range of expansion of the piezo-electric element 17. The resistance of the plates 8 and 10 increases the accuracy of the toolpost 1 because voltages applied across the piezo-electric element 17, which would have resulted in large movements of the tool 12, now result in smaller movements. The inaccuracy that would normally be associated with the large movement is also scaled down by a similar degree.

The piezo-electric element 17 thus allows precise adjustment of the tool position over a limited range of about 2 $\mu$m. The hysteresis associated with the movement of the piezo-electric element 17 which would lead to inaccuracies is substantially reduced by holding the element 17 in compression between the ball bearings 16 and 18. This allows a resolution of better than 10 nm to be achieved. The maximum range could be extended to about 10 $\mu$m, possibly up to about 100 $\mu$m if only soft materials, such as polymers and soft metals, were to be machined.

The spindle 4 may rotate the workpiece 3 at any angular velocity up to the point where the workpiece 3 shatters on contact with the tool 12. This wide range of angular velocities is highly advantageous since it allows highly detailed surfaces to be machined using this technique. If, for instance, a distinct 'step' is required in the workpiece 3 the angular velocity of the workpiece 3 may be reduced to allow for the time it takes the tool 12 to move the height of the step, thus allowing a substantially accurate step to be produced. Typically the workpiece 3 is rotated from 2000 to 3000 revolutions per minute.

The output from the QPD 16 may be utilised by the computer controlling the operation when it is necessary to monitor the position of the carrier 11, and thereby the tool point 13, with respect to a datum line. The QPD 16 merely provides a convenient method for monitoring the position of the tool 12. Other suitable methods include fibre optics probes, strain guages and capacitive micrometers, as will be readily appreciated by one skilled in the art. The QPD 16 is advantageous because of its compact size and ease of applicability to the carrier 11.

The output from the QPD 16 changes when the amount of light falling on it varies. Thus if the carrier 11 is moved in a direction non-parallel with the direction of the lower beam, the datum line, the output from the QPD 16 is altered and the piezo-electric element 17 may be energised to correct the error.

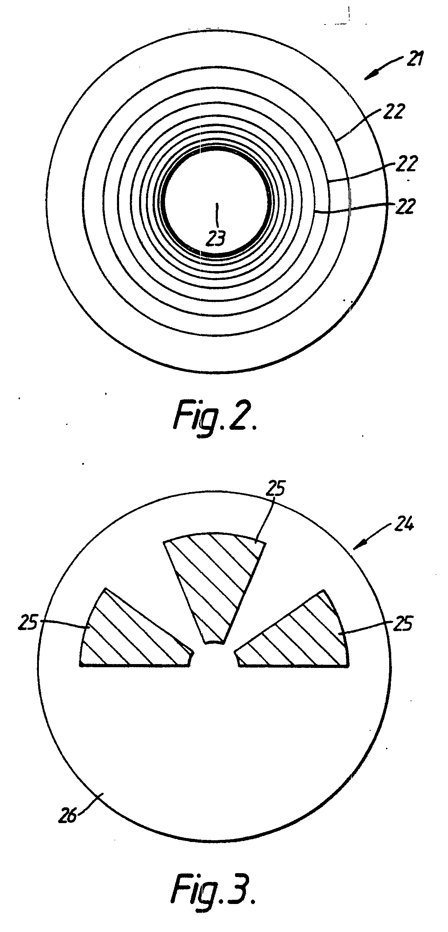

This invention allows a variety of components to be produced. Figure 2 shows an infrared binary zone-plate 21 with grooves 22 at precise distances from a centre 23 of the zone plate 21. The grooves produce a half wavelength phase difference in the transmitted radiation and so must be of accurate depth. A germanium infra-red binary zone-plate was produced by connecting the terminals of the piezo-electric element, through a relay, to a power supply which was set to output a voltage to cause the piezo-electric element to expand to move the tool to produce the depth of cut required. The germanium was first faced-off in the usual manner using the standard lathe controls and then, using the facing-off depth as a datum another pass was made to produce the zone-plate. The cross slide was connected to a linear transducer, the output from the transducer was fed to a computer which switched the relay (and hence the piezo-electric element) on or off when the computer determined that the transducer output indicated the tool point was at a zone edge. The depth of cut was controlled solely by the piezo-electric element.

The invention is also suitable for manufacturing off axis or irregularly shaped components, and components requiring a varied depth of cut within one rotation. Figure 3 shows one such component. A 6 mm thick germanium disc 24 of 30 mm diameter has shaded areas 25 raised above an unshaded area 26 by 100 nm (plus or minus 10 nm).

The relay and power supply referred to above may be replaced by a digital-to-analogue converter. A computer monitors the position of the cross slide and the rotation of the spindle. Using this information to determine the precise location of the tool 12 the computer outputs a signal to the digital-to-analogue converter which controls the voltage applied to the piezo-electric element, and thereby the depth of the tool point. In this way blazed or sinusoidal zone plates may also be produced.

When soft materials are being machined the depth of cut (on which the depth variations are superimposed by the piezo-electric element) can be as large as 50 $\mu$m. An alternative method may therefore be employed in which a finished component is produced in one pass by omitting the facing off stage.

The present invention may also be used to machine a curved workpiece. In this case the toolslide substantially follows the surface of the workpiece allowing the piezo-electric element to control the less than 100 $\mu$m movements of the tool perpendicular to the surface of the workpiece.

A number of alternative constructions are possible. For instance the rear housing 6 may be internally threaded to screw onto an externally threaded front housing 5. Thus the operations of holding the plate 10 and placing the piezo-electric element 17 in compression may be carried out without adjustable screw 20. Further the plates 8 and 10 may be replaced by any suitable resilient supporting means including using a single plate. The piezo-electric element 17 may also be aligned so that it is not co-axial with centre line 7 thus allowing the toolpost 1 to be more compact.

## Claims

1. A machine tool for single point diamond turning for use with a workpiece holder (4) which holds and rotates a workpiece (3), the machine tool comprising a tool carrier (11) arranged for movement towards and away from the workpiece (3), a rigidly held piezo-electric element (17) to which the tool carrier (11) is operatively coupled and resistance means (8,10) to resist movement of the tool carrier (11) towards the workpiece (3), so that when a voltage is applied to the piezo-electric element (17) it expands and moves the tool carrier (11) towards the workpiece (3) against the resistance of the resistance means (8,10).

2. A machine tool according to claim 1 in which the resistance means (8,10) comprises at least one resilient plate which engages the tool carrier (11).

3. A machine tool according to claim 2 in which the resistance means (8,10) comprises a pair of the resilient plates mounted at opposed ends of the tool carrier (11).

4. A machine tool according to any one of claims 1 to 3 in which the direction of expansion of the piezo-electric element (17) is parallel with the axis of rotation of the workpiece holder (4).

5. A machine tool according to any preceding claim further comprising means, including a quadrant photo-diode (16), for indicating the position of a tool (12) which is carried by the tool carrier (11).

6. A machine tool according to any preceding claim further comprising means (18,19,20) for holding the piezo-electric element (17) in compression.

7. A single point diamond tool turning method in which a workpiece (3) is rotated by a spindle which is part of a lathe with lathe controls, the method comprising the steps of controlling movements of the diamond tool (12) towards the workpiece by the lathe controls and superimposing additional movements of the diamond tool (12) towards the workpiece (3) of up to 100 $\mu$m by applying a voltage across a rigidly held piezo-electric element (17) which expands to move the diamond tool (12) against resistance towards the workpice (3).

8. A method according to claim 7 wherein the additional movements superimposed by the piezo-electric element (17) are up to 10 μm.

9. A method according to claim 8 wherein the additional movements superimposed by the piezo-electric element (17) are up to 2 μm.

10. A method according to any one of claims 7 to 9 in which the piezo-electric element (17) expands in a direction substantially parallel with the axis of rotation of the workpiece (3).

*Fig.1.*

EP 0 402 011 A2

Fig.2.

Fig.3.